(19) Europäisches Patentamt
European Patent Office
Office européen des brevets

(11) EP 4 657 585 A1

(12) EUROPEAN PATENT APPLICATION
published in accordance with Art. 153(4) EPC

(43) Date of publication:
**03.12.2025 Bulletin 2025/49**

(21) Application number: **24892460.7**

(22) Date of filing: **04.06.2024**

(51) International Patent Classification (IPC):
***H01M 10/0525*** *(2010.01)*

(52) Cooperative Patent Classification (CPC):
Y02E 60/10

(86) International application number:
**PCT/CN2024/097267**

(87) International publication number:
**WO 2025/213552 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2024 CN 202410431020**

(71) Applicant: **Qingtao (Kunshan) Energy Development Group Co., Ltd.**
**Ketd, Kunshan**
**Suzhou, Jiangsu 215000 (CN)**

(72) Inventors:
- **ZHANG, Xue**
  **Suzhou**
  **Jiangsu 215000 (CN)**
- **WANG, Mingtan**
  **Suzhou**
  **Jiangsu 215000 (CN)**
- **YANG, Xue**
  **Suzhou**
  **Jiangsu 215000 (CN)**
- **FENG, Yuchuan**
  **Suzhou**
  **Jiangsu 215000 (CN)**
- **LI, Zheng**
  **Suzhou**
  **Jiangsu 215000 (CN)**

(74) Representative: **Meyer-Dulheuer MD Legal Patentanwälte PartG mbB**
**Hanauer Landstr. 287-289**
**60314 Frankfurt am Main (DE)**

# (54) HIGH-VOLTAGE LITHIUM ION BATTERY

(57) The present application belongs to the field of batteries and discloses a high-voltage lithium-ion battery including a positive electrode, a negative electrode, and an electrolyte. In the present application, a complex containing carboxylate of a branched structure is used as the electrolyte solvent, which greatly meets the requirements of the high-voltage battery system, and improves the high-temperature resistance and high-voltage resistance stabilities of the battery, and improves the low-temperature cycling performance of the battery.

EP 4 657 585 A1

## Description

TECHNICAL FIELD

The present application relates to a lithium-ion battery, in particular a lithium-ion battery used in high-voltage systems.

BACKGROUND

As one of the four major components of lithium-ion batteries, the electrolyte has a significant impact on the performance of lithium-ion batteries. Compared with the widely used carbonate-based electrolyte (EC) at present, carboxylate solvent has a higher dielectric constant and lower viscosity, and its melting point is lower than that of carbonate; hence, the carboxylate solvent is a low-temperature solvent with excellent performance. However, at present, the widely used carboxylate solvents are basically small molecule solvents such as methyl formate, ethyl acetate, butyl acetate, methyl acetate, ethyl propionate, etc., and they are usually used as auxiliary solvents to be compounded with solvents such as carbonate, and there is a lack of comprehensive research on carboxylate solvents and compounding systems. CN107666011A discloses an electrolyte system using carboxylate as the main solvent. It is found that the electrolyte systems prepared from isomers having the same molecular weight have greatly different performances.

On the other hand, with the popularization and development of electrification technology, at present, the requirements for the energy density of electrochemical energy storage devices represented by lithium-ion batteries are becoming higher and higher. Enhancing energy density is the hot and difficult point of current research. Improving the charging cut-off voltage of conventional positive electrode materials is one of the methods to improve energy density; for example, if the charging voltage of lithium cobalt oxide is increased to 4.35 V and 4.4 V, the capacity of the battery can be increased by about 15%. However, with the increase of the working voltage and the charging cut-off voltage, the oxidizing activity of the positive electrode material is increased, and the reaction between the positive electrode active material and the electrolyte is thereby accelerated, resulting in a serious swollen of the battery at high voltage and a reduction of the cycling performance, which seriously restricts the performance of the positive electrode material. On the other hand, with the increase of voltage, the low-temperature charge-discharge performance of the battery cell decreases sharply, and especially the discharging capacity decreases significantly at a low temperature of -40°C.

Therefore, it is of great significance for improving the overall performance of batteries to develop electrolytes suitable for high-voltage material systems, and the present application provides a high-voltage battery containing a new carboxylate solvent system, which is a better solution to the current problems of high-voltage batteries.

SUMMARY

To solve the above problems, the present application provides a lithium-ion battery including a positive electrode, a negative electrode, and an electrolyte; the electrolyte includes a solvent, the solvent includes a compound A and a compound B, and a mass fraction of the compound A in the solvent is denoted as $w_A$, and a mass fraction of the compound B in the solvent is denoted as $w_B$; and the compound A satisfies the following structural formula:

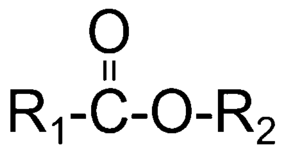
,

wherein each of $R_1$ and $R_2$ is independently selected from a hydrocarbyl group and a fluoro-hydrocarbyl group, a number of the methyl group in $R_1$ is x, and $2 \leq x \leq 5$; and at least one carbon atom in a main chain of $R_1$ is connected with at least two methyl groups;

the compound B satisfies the following structural formula:

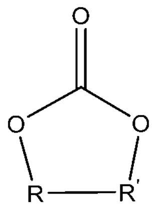,

wherein R and R' are methylene groups, at least one H atom of at least one of R and R' is substituted by F atom, and a number of the F atom in R and R' is y, and $1 \leq y \leq 4$;

$w_A$, $w_B$, x, and y satisfy the following relationship:

$$1.5 \leq w_A/w_B \leq 50;$$

and

$$3 \leq x + y \leq 7;$$

preferably, $2.4 \leq w_A/w_B \leq 20$;

preferably, $3 \leq x + y \leq 5$.

Preferably, a number of carbon atom in the main chain of $R_1$ is 1-3.
Preferably, the lithium-ion battery includes at least one positive electrode active material having a charging cut-off voltage of ≥ 4.5 V.
Preferably, a lithium-intercalation cut-off potential of the negative electrode ≤ 1.0 V.
Preferably, the total number of carbon atom in $R_1$ and $R_2$ is greater than or equal to 4 and less than or equal to 9.
Preferably, the number of carbon atom in a main chain of $R_2$ is 1-3.
Preferably, $R_2$ is selected from one of a methyl group and an ethyl group.
Preferably, in the compound A, at least one H atom of $R_1$ and $R_2$ are substituted by F atom.
Preferably, in the compound A, at least one H atom in $R_1$ is substituted by F atom.
Preferably, a mixture consisting of the compound A and the compound B accounts for 60-100% of the total mass of the solvent.
Preferably, the mixture consisting of the compound A and the compound B accounts for 70-100% of the total mass of the solvent.
Preferably, the mixture consisting of the compound A and the compound B accounts for 80-100% of the total mass of the solvent.
Preferably, the mixture consisting of the compound A and the compound B accounts for 90-100% of the total mass of the solvent.
Preferably, the positive electrode active material is a mixture of a plurality of materials having a charging cut-off voltage of ≥ 4.5 V.
In the present application, the combination of two compounds of particular structures to form an electrolyte solvent system unexpectedly produces a good result in the high-voltage battery system, and significantly improves the room-temperature cycling performance and low-temperature charge-discharge performance of the high-voltage battery.

## DETAILED DESCRIPTION

This embodiment provides a high-voltage lithium-ion battery including a, a negative electrode, and an electrolyte; the electrolyte includes a solvent, the solvent includes a compound A and a compound B, and a mass fraction of the compound A in the solvent is denoted as $w_A$, and a mass fraction of the compound B in the solvent is denoted as $w_B$; and the compound A satisfies the following structural formula:

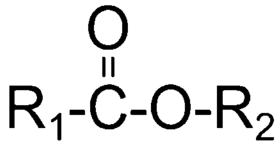

,

wherein solvent A has a mass fraction denoted as $w_A$, a number of the methyl group in $R_1$ is x, and $2 \leq x \leq 5$; and at least one carbon atom in a main chain of $R_1$ is connected with at least two methyl groups;

the compound B satisfies the following structural formula:

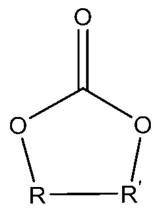

,

wherein R and R' are methylene groups, at least one H atom of at least one of R and R' is substituted by F atom, and a number of F atom in R and R' is y, and $1 \leq y \leq 4$;

solvent B has a mass fraction denoted as $w_B$,

$$1.5 \leq w_A/w_B \leq 50;$$

preferably, $2.4 \leq w_A/w_B \leq 20$;

$$3 \leq x + y \leq 7;$$

preferably, $3 \leq x + y \leq 5$.

Preferably, a number of carbon atom in the main chain of $R_1$ is 1-3.

Preferably, a mixture consisting of the compound A and the compound B accounts for 50-100% of the total mass of the solvent.

Preferably, the mixture consisting of the compound A and the compound B accounts for 60-100% of the total mass of the solvent.

Preferably, the mixture consisting of the compound A and the compound B accounts for 70-100% of the total mass of the solvent.

Preferably, the mixture consisting of the compound A and the compound B accounts for 80-100% of the total mass of the solvent.

Preferably, the mixture consisting of the compound A and the compound B accounts for 90-100% of the total mass of the solvent.

It is to be understood that for either $R_1$ or $R_2$, the main chain means, in a case where $R_1$ or $R_2$ contains a special functional group (such as an alkenyl group, an alkynyl group, a cycloalkyl group, etc.; the special group has its conventional definition in the field of organic chemistry, which will not be repeated redundantly herein), the carbon chain containing the special functional group; if no special functional group is contained, the main chain is the longest carbon chain. It should be noted that the methyl group at the end of the chain is not counted in the main chain length in the present application for the convenience of description.

For example, in compound $R_1C(O)OCH(CH_3)C(CH_3)_3$, $R_2$ is $CH(CH_3)C(CH_3)_3$; according to the above counting rule, -CH-C- is the main chain, and the number of carbon atom in the main chain is 2, wherein the carbon atoms in -CH-C- are counted in the main chain, while the terminal methyl group ($CH_3$) is not counted in the number of carbon atom in the main chain; similarly, the H in the terminal methyl group is not counted in the main chain. The number of hydrogen atoms in the main chain -CH-C- is 1.

It is to be understood that when $R_2$ is a methyl group, the number of carbon atom in the main chain is 0.

Preferably, the total number of carbon atom in $R_1$ and $R_2$ is greater than or equal to 4 and less than or equal to 9.

It is to be understood that the total number of carbon atom herein does not refer to the number of carbon atom in the main chain, but to the number of all the carbon atoms in $R_1$ and $R_2$ where the terminal methyl group is contained. For example, in compound $R_1C(O)OCH(CH_3)C(CH_3)_3$, $R_2$ is $CH(CH_3)C(CH_3)_3$, the number of carbon atom is 6. A higher number of carbon atoms in $R_1$ and $R_2$ is prone to cause undesired negative effects on the battery performance.

Preferably, the number of carbon atom in the main chain of $R_2$ is 1-3.

Preferably, $R_2$ is selected from one of a methyl group and an ethyl group.

Preferably, in the compound A, at least one H atom of $R_1$ and $R_2$ are substituted by F atom.

Preferably, in the compound A, at least one H atom in $R_1$ is substituted by F atom.

As an embodiment, each of $R_1$ and $R_2$ is independently selected from a hydrocarbyl group and a fluorohydrocarbyl group which contain 1-3 carbon atoms in their main chains.

As an embodiment, the carbon atom in the main chain of $R_2$ is not connected with a hydrogen atom.

As an embodiment, in the compound A, at least one H atom of $R_1$ and $R_2$ are substituted by F atom.

As an embodiment, in the compound A, at least one H atom in $R_1$ is substituted by F atom.

As an embodiment, in the compound A, at least one H atom in $R_2$ is substituted by F atom.

As an embodiment, $R_2$ contains more than 2 methyl groups and each of the methyl groups has at least one H substituted by F.

As an embodiment, the number of hydrogen atom in the main chain of $R_2$ is less than or equal to 1.

It is to be understood that for compound A, F substitution is a known technology, and fluorine-substituted ester compounds have some relatively better properties. Without violating the inventive concepts of the present application, any fluorine-substituted modification on the compound A based on the actual need for use should be regarded as being within the scope of protection of the present application.

The number of hydrogen atom in the main chain described above being less than or equal to 1 means that the number of hydrogen atom connected on the carbon atom of the main chain is less than or equal to 1 after the terminal methyl group is removed. For example, in compound $R_1C(O)OCH(CH_3)C(CH_3)_3$, $R_2$ is $CH(CH_3)C(CH_3)$, the main chain is -CH-C, and the number of hydrogen atom in the main chain is 1.

As an embodiment, the compound A accounts for 60-98% of the total mass of the solvent.

As a preferred embodiment, the compound A accounts for 70-98% of the total mass of the solvent.

Surprisingly, on the basis that the compound A and the compound B satisfy their proportion relation of the present application, the performance of the electrolyte of the present application will be improved with the content increase of the compound B.

It is to be understood that the compound B plays the role of an additive in the electrolyte system, which assists in film formation, provides physical and chemical stability, inhibits redox reactions, enhances the interfacial stability of the solid electrolyte, improves the charge-discharge performance of the battery, and inhibits the generation of viscous liquid; the above mechanistic knowledge does not hinder the limitation of the use of compound B in the present application. It should be understood that all the technical solutions where the compound A and compound B are combined for use within the proportion relation limited by the present application shall fall within the scope of protection of the present application.

Preferably, the compound B accounts for 10% or more of the total mass of the solvent.

It is conjectured that when the addition amount of the compound B is greater than 10%, there will be a more effective compounding action between the F atom and the compound A; however, the conjecture is not to limit the scope of protection.

It is to be understood that the solvent may include one compound A satisfying the structural formula, or it may be a mixture formed by two or more compounds A satisfying the relative structural formula, i.e., the solvent may include a compound $A_1$ and a compound $A_2$.

As an embodiment, the solvent includes two or more compounds A satisfying the structural formula.

As an embodiment, the solvent includes two or more compounds A satisfying the structural formula.

It is to be understood that in a case where the composition and proportion relation of compound A and compound B of the present application are satisfied, the electrolyte solvent may include other compounds which do not fulfill the structural formula.

It is to be understood that the use of the compound satisfying the structural formula or a mixture consisting of two or more such compounds as the main solvent can significantly improve the battery performance, but the technical solutions of using other carboxylate compounds which do not satisfy the structural formula are not excluded from the scope of protection of the present application. For example, two compounds that satisfy the structural formula are used and their mass accounts for 80% of the total mass of the electrolyte solvent, meanwhile, the electrolyte solvent also contains a compound C of carboxylate compound with more than one hydrogen atom in the main chain of $R_1$, and the mass of the compound C accounts for 5% of the total mass of the electrolyte; such technical solution shall also be regarded as being within the scope of protection of the present application. It is to be understood that the electrolyte solvent of the high-voltage lithium-ion battery system should be regarded as falling into the scope of protection of the present application as long as the compound satisfying the mass proportion of the present application is used, and not all carboxylate compounds used must

satisfy the structural formula.

As an embodiment, the solvent further includes a cyclic carbonate, and the mass of the cyclic carbonate accounts for 0-20% of the total mass of the solvent.

As a preferred embodiment, the mass of the cyclic carbonate accounts for 0-10% of the total mass of the mass.

As an embodiment, the solvent further includes a chain carbonate, and the mass of the chain carbonate accounts for 0-20% of the total mass of the solvent.

As a preferred embodiment, the mass of the chain carbonate accounts for 0-10% of the total mass of the solvent.

As a preferred embodiment, the total mass of the cyclic carbonate and the chain carbonate accounts for 0-20% of the total mass of the solvent; preferably, the total mass of the cyclic carbonate and the chain carbonate accounts for 0-10% of the total mass of the solvent; preferably, the total mass of the cyclic carbonate and the chain carbonate accounts for 0-5% of the total mass of the solvent, and neither the mass of cyclic carbonate nor the mass of chain carbonate is zero.

It is to be understood that the high-voltage positive electrode material means that the positive electrode active material has a high working voltage, and in general, the positive electrode material having a charging cut-off voltage of 4.5 V or more is called high-voltage material. At present, the conventional carbonate-based electrolyte cannot be well fitted in the high-voltage system, improving the oxidation resistance of the electrolyte is the main strategy, the positive electrode material is not particularly limited in the present application, and any known high-voltage positive electrode material can be used in the present application on the basis that the inventive conception of the present application is not violated.

Preferably, the positive electrode material has a charging cut-off voltage of greater than 4.5 V;

Further preferably, the positive electrode material has a charging cut-off voltage of greater than 4.6 V;

Particularly preferably, the positive electrode material has a charging cut-off voltage of greater than 4.8 V.

It is to be understood that the positive electrode material of the present application may be a mixture or a pure substance. When it is a pure substance, it may be a positive electrode active material having a charging cut-off voltage of greater than 4.5 V. When it is a mixture, it may be a mixture of a plurality of positive electrode active materials having a charging cut-off voltage of greater than 4.5 V, or it may be a mixture of one or more positive electrode active materials having a charging cut-off voltage of greater than 4.5 V and one or more positive electrode materials having a charging cut-off voltage of lower than 4.5 V.

As an embodiment, the positive electrode active material is a mixture and at least one of the positive electrode active materials therein has a voltage plateau of higher than 4.5 V.

As an embodiment, the positive electrode active material is a mixture and at least one of the positive electrode active materials therein has a charging cut-off voltage of ≥ 4.6V.

As an embodiment, the positive electrode active material is a mixture of a plurality of positive electrode active materials having a charging cut-off voltage of ≥ 4.6V.

As an embodiment, the positive electrode active material is a pure substance.

It is to be understood that a pure substance means that there is only one positive electrode active material, and the presence of impurities and non-positive electrode active material additives in a single positive electrode active material system should not be interpreted as the positive electrode active material system being a mixture.

Preferably, the positive electrode active material has a charging cut-off voltage of > 4.8 V.

Preferably, the positive electrode active material having a charging cut-off voltage of greater than 4.5 V accounts for 50wt% or more of all the positive electrode active materials in the positive electrode active material layer.

Preferably, the positive electrode active material having a charging cut-off voltage of greater than 4.5 V accounts for 60wt% or more of all the positive electrode active materials in the positive electrode active material layer.

Preferably, the positive electrode active material having a charging cut-off voltage of greater than 4.5 V accounts for 70wt% or more of all the positive electrode active materials in the positive electrode active material layer.

Preferably, the positive electrode active material having a charging cut-off voltage of greater than 4.5 V accounts for 80wt% or more of all the positive electrode active materials in the positive electrode active material layer.

Preferably, the positive electrode active material having a charging cut-off voltage of greater than 4.5 V accounts for 90wt% or more of all the positive electrode active materials in the positive electrode active material layer.

Preferably, the positive electrode active material having a charging cut-off voltage of greater than 4.5 V accounts for 95wt% or more of all the positive electrode active materials in the positive electrode active material layer.

It is to be understood that for a multilayer electrode used, as long as one layer of the entire positive electrode active material layers meets the above percentage requirement, the multilayer electrode should be regarded as falling within the scope of protection of the present application. The above-mentioned positive electrode active material layer should be understood as the active material layer containing the positive electrode active material having a charging cut-off voltage of greater than 4.5 V, rather than the entire positive electrode active material layers.

Only as an illustrative example rather than a limitation to the scope of protection, the positive electrode active material working at a potential of greater than 4.5 V relative to lithium is preferably a lithium-containing composite oxide. The lithium-containing composite oxide includes a spinel-type lithium-manganese composite oxide, an olivine-type lithium-manganese-containing composite oxide, and an inverse spinel-type lithium-manganese-containing composite oxide. Specifically, for example, the compound represented by $Li_a(M_xMn_{2-x})O_4$, wherein $0.4 < x < 2$ and $0 < a < 1.2$; and M is at least one selected from the group consisting of Ni, Co, Fe, Cr, and Cu. Among these oxides, the spinel-type lithium-manganese composite oxide is preferably used in view of safety.

Additionally, the lithium-manganese complex oxide containing Mn can be, for example, a manganese spinel represented by the following formula.

Preferably, the lithium-manganese composite oxide represented by the following formula is preferably used. $Li_a(M_xMn_{2-x-y}Y_y)(O_{4-w}Z_w)$ wherein $0.4 < x \leq 1.2$, $0 \leq y$, $x + y < 2$, $0 \leq a \leq 1.2$, and $0 \leq w \leq 1$; M is at least one selected from Co, Ni, Fe, Cr, and Cu; Y is at least one selected from Li, B, Na, Mg, Al, Ti, Si, K, and Ca; and Z is at least one selected from F and Cl.

Preferably, from the viewpoint of obtaining sufficient capacity and realizing a longer life, among these lithium-manganese composite oxides, the spinel-type compound represented by the following formula is preferably used. $LiNi_xMn_{2-x-y}A_yO_4$ wherein $0.4 < x < 0.6$ and $0 \leq y < 0.3$, and A represents at least one metal selected from Li, B, Na, Mg, Al, Ti, and Si. Preferably $0 \leq y < 0.2$.

Preferably, other examples of the high-voltage positive electrode active material include an olivine compound represented by the following formula.

$Li_xMPO_4F_y$, wherein $0 \leq x \leq 2$ and $0 \leq y \leq 1$ and M is at least one selected from Co and Ni.

Preferably, examples of the positive electrode active material having a charging cut-off voltage reaching 5 V include a compound represented by the following formula.

$Li_x[Li_aM_bMn_{1-a-b}]O_2$, wherein $0 \leq x \leq 1$, $0.05 \leq a \leq 0.3$, and $0.1 < b < 0.4$, and M is at least one selected from Ni, Co, Fe, and Cr.

It is to be understood that when the positive electrode active material is a mixture of a high-voltage positive electrode active material and a positive electrode active material having a charging cut-off voltage of less than 4.5 V, the type of the positive electrode active material having a charging cut-off voltage of less than 4.5 V is not particularly limited in the present application, and any known positive electrode active materials can be used in the present application on the basis that the inventive conception of the present application is not violated. Only as an illustrative example rather than a limitation on the scope of protection, the positive electrode active material having a charging cut-off voltage of less than 4.5 V is one of a layered oxide positive electrode material, a spinel positive electrode, and a polyanion positive electrode. For example, the layered oxide positive electrode (e.g., a rock salt layered oxide) includes one or more lithium-based positive electrode active materials selected from: $LiCoO_2$(LCO), $LiNi_{1-x-y}Co_xAl_yO_2$ (wherein $0 \leq x \leq 1$ and $0 \leq y \leq 1$), and $Li_{1+x}MO_2$ (wherein M is one of Ni, Co, and Al, and $0 \leq x \leq 1$); the spinel positive electrode includes one or more lithium-based positive electrode active materials selected from: $LiMn_2O_4$(LMO) and $LiNi_xMn_{1.5}O_4$; the olivine-type positive electrode includes one or more lithium-based positive electrode active materials $LiMPO_4$ (wherein M is at least one of Fe, Ni, and Co); it is to be understood that the above mentioned materials are merely illustrative examples, rather than limitations on the scope of protection.

In one embodiment, the one or more lithium-based positive electrode active materials may optionally be coated (for example, by $LiNbO_3$ and/or $Al_2O_3$) and/or doped (for example, with magnesium (Mg)) or two positive electrode active materials may be cladded with each other to form a core-shell structure, and for example, a low-voltage positive electrode material is cladded on a high-voltage positive electrode material; it is to be understood that improvements to the positive electrode material or positive electrode active material layer are within the scope of protection of the present application. In addition, in some embodiments, the one or more lithium-based positive electrode active materials may optionally be mixed with one or more conductive agents that provide electron conduction pathways and/or at least one polymeric binder that improves the structural integrity of the positive electrode. For example, the positive electrode active material layer may include one or more lithium-based positive electrode active materials of more than or equal to about 30wt% to less than or equal to about 99wt%; a conductive agent of more than or equal to about 0wt% to less than or equal to about 30 wt%; and a binder of more than or equal to about 0wt% to less than or equal to about 20wt%; and optionally in some aspects, a binder of more than or equal to about 1wt% to less than or equal to about 20 wt%. Among the lithium-based positive electrode active materials, the proportion relationship of the high-voltage positive electrode material is not limited in the present application, and on the basis that the inventive conception of the present application is not violated, any adjustments of the addition amounts of the high-voltage positive electrode material shall be regarded as falling within the scope of protection of the present application; as a preferred technical solution, the positive electrode active material having a charging cut-off voltage of greater than 4.5 V accounts for 50wt% or more of all the positive electrode active materials; further preferably, the positive electrode active material having a charging cut-off voltage of greater than 4.5 V accounts for 70wt% or more of all the positive electrode active materials; particularly preferably, the positive electrode active material having a charging cut-off voltage of greater than 4.5 V accounts for 90wt% or more of all the positive electrode active materials.

The positive electrode active material is optionally blended with the following binders: such as polytetrafluoroethylene (PTFE), sodium carboxymethyl cellulose (CMC), styrene-butadiene rubber (SBR), polyvinylidene fluoride (PVDF), nitrile butadiene rubber (NBR), styrene-ethylene-butylene-styrene copolymer (SEBS), styrene-butadiene-styrene copolymer (SBS), lithium polyacrylate (LiPAA), sodium polyacrylate (NaPAA), sodium alginate, lithium alginate, or combinations thereof. The conductive agent may include a carbon-based material, powdered nickel, or other metal particles, or a conductive polymer. The carbon-based material may include, for example, carbon black, graphite, acetylene black (e.g., KETCHENTM black or DENKATM black), carbon fibers and nanotubes, graphene, and other particles. Examples of the conductive polymer include polyaniline, polythiophene, polyacetylene, and polypyrrole.

Surprisingly, the electrolyte system of the present application is particularly suitable for high-voltage battery systems and, at the same time, is reduction-resistant for the negative electrode, providing a good overall performance.

Preferably, a lithium-intercalation cut-off potential of the negative electrode ≤ 1.0 V.

It is known that for the carboxylate solvent, branched chains will cause the electrolyte viscosity to be overly high, thus affecting the battery performance. Surprisingly, the electrolyte system of the present application has good viscosity performance and maintains good low-temperature capacity retention even at low temperatures.

For the compound A, an increase in the number of methyl groups will increase the electrolyte viscosity, adversely affecting the battery. Surprisingly, when the number of methyl groups in $R_1$ of the compound satisfies a specific relationship with the number of F atoms of the compound B, the compound exhibits particular advantages in the high-voltage system, and shows a better effect compared to the compounding material of compound B and a linear carboxylate, which is markedly different from the prior art where the linear carboxylate exhibits a better performance especially in the non-high-voltage system.

As a preferred embodiment, the structural formula of the compound B is selected from one of the following structural formulas:

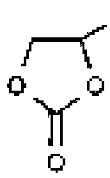

I

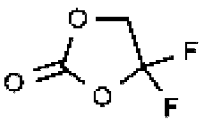

II

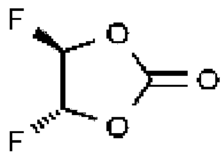

III

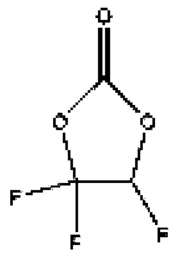

IV

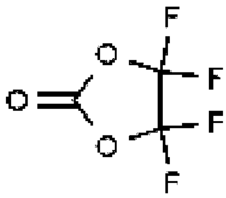

V

Preferably, the electrolyte includes two or more compounds B satisfying the structural formula.

It is to be understood that the electrolyte further includes a lithium salt, the type of lithium salt is not particularly limited in the present application, and any known lithium salt can be used in the present application on the basis that the inventive conception of the present application is not violated. Only as an illustrative example rather than a limitation to the scope of protection, the suitable lithium salt usually has an inert anion. A non-limiting list of lithium salts that can be dissolved in organic solvents or mixtures of organic solvents to form non-aqueous liquid electrolyte solutions includes: lithium hexafluorophosphate ($LiPF_6$), lithium perchlorate ($LiClO_4$), lithium tetrachloroaluminate ($LiAlCl_4$), lithium iodide (LiI), lithium bromide (LiBr), lithium thiocyanate (LiSCN), lithium tetrafluoroborate ($LiBF_4$), lithium difluoro(oxalato)borate ($LiBF_2(C_2O_4)$) (LiODFB), lithium tetraphenylborate ($LiB(C_6H_5)_4$), lithium bis(oxalate)borate ($LiB(C_2O_4)_2$) (LiBOB), lithium tetrafluoro oxalato phosphate ($LiPF_4(C_2O_4)$) (LiFOP), lithium nitrate ($LiNO_3$), lithium hexafluoroarsenate ($LiAsF_6$), lithium trifluoromethanesulfonate ($LiCF_3SO_3$), lithium bis(trifluoromethanesulfonimide) (LITFSI) ($LiN(CF_3SO_2)_2$), lithium bis (fluorosulfonyl)imide ($LiN(FSO_2)_2$) (LIFSI), and combinations thereof. In some variations, the lithium salt is selected from lithium hexafluorophosphate ($LiPF_6$), lithium bis(trifluoromethanesulfonimide) (LiTFSI) ($LiN(CF_3SO_2)_2$), lithium bis(fluorosulfonyl)imide ($LiN(FSO_2)_2$) (LiFSI), lithium fluoroalkylphosphonate (LiFAP), lithium phosphate ($Li_3PO_4$), and combinations thereof.

In some technical solutions, the electrolyte may include one or more lithium salts having a concentration of more than or equal to 1 M to less than or equal to about 2 M. In some variations, for example, in a case where the electrolyte has a lithium concentration of greater than about 2 M or has an ionic liquid, the electrolyte may include one or more diluents, such as hydrofluoroether (HFE).

It is to be understood that the solvent may also include other solvents in addition to compound A and compound B, such as one or more of carbonate, sulfite, sulfonate, sulfone, ether, organosilicon compounds, organoboron compounds, nitrile, ionic liquids, and nitrile-phosphorus compounds, and on the basis that the inventive conception of the present application is not violated, the use of other solvents in the solvent shall still be regarded as falling within the scope of the protection of the present application. Only as an illustrative example rather than a limitation to the scope of protection, on

the basis that the inventive conception of the present application is not violated, the known carbonate can be a cyclic carbonate and a linear carboxylate; only as an illustrative example rather than a limitation to the scope of protection, the cyclic carbonate may be one or more of ethylene carbonate (EC), propylene carbonate (PC), and butylene carbonate (BC); the linear carbonate may be one or more of dimethyl carbonate (DMC), diethyl carbonate (DEC), and ethyl methyl carbonate (EMC). Aliphatic carboxylate (e.g., methyl formate, methyl acetate, methyl propionate), γ-lactone (e.g., γ-butyrolactone, γ-valerolactone), linear ether (e.g., 1,2-dimethoxyethane (DME), 1-2-diethoxyethane, ethoxymethoxyethane), cyclic ether (e.g., tetrahydrofuran, 2-methyltetrahydrofuran), 1,3-dioxolane (DOL), sulfur compounds (e.g., sulfolane), and combinations thereof.

Surprisingly, although the embodiment of adding carbonate to the electrolyte system of the present application is feasible, the addition of carbonate could not improve the performance of the electrolyte of the present application and the battery including the electrolyte, and on the contrary, the absence of carbonate is advantageous.

Preferably, in the electrolyte, an addition amount of carbonate is less than 10wt% of the total mass of the electrolyte;

further preferably, in the electrolyte, an addition amount of carbonate is less than 5wt% of the total mass of the electrolyte.

Further preferably, in the electrolyte, an addition amount of carbonate is less than 5wt% of the total mass of the electrolyte.

More further preferably, in the electrolyte, an addition amount of carbonate is less than 1wt% of the total mass of the electrolyte.

Particularly preferably, in the electrolyte, an addition amount of carbonate is less than 0.01wt% of the total mass of the electrolyte.

It is to be understood that the carbonate conforms to the conventional definition in the art and refers to a compound obtained from a carbonate molecule in which the hydrogen atoms of the two hydroxyl groups (-OH) are partially or wholly substituted by alkyl groups ($R_3$, $R_4$). The general formula is $R_3O\text{-}CO\text{-}OH$ or $R_3O\text{-}CO\text{-}OR_4$. Fluorinated carbonates or other carbonates modified by substitution are not included.

As an embodiment, the electrolyte further includes an additive, and the additive of the present application includes, but is not limited to, at least one of a film-forming additive, an anti-overcharging additive, a flame-retardant additive, a conductive additive and a wetting additive. It is to be understood that the above additives are only illustrative examples; on the basis that the inventive conception of the present application is not violated, the use of additives according to the needs for different functions should still be regarded as falling within the scope of protection of the present application.

The lithium-ion battery further includes a separator or a solid electrolyte membrane or a combination of the two, the separator may be a micro-porous polymer separator, such as polyolefin, including the polyolefin prepared from homopolymer (derived from a single monomer component) or heteropolymer (derived from more than one monomer components), and the homopolymer and heteropolymer may have a linear structure or a branched structure. In some aspects, the polyolefin may be polyethylene (PE), polypropylene (PP), or a blend of PE and PP, or a multilayer structured porous membrane of PE and/or PP.

When the separator is a microporous polymer separator, it may have a single layer or be a multilayer laminate. For example, in one embodiment, a single layer of polyolefin may form the entire microporous polymer separator. As another embodiment, a plurality of similar or different layered structure may be assembled to form the separator.

Additionally, the separator may be blended with a ceramic material or it may be coated with a ceramic material on its surface. For example, the ceramic coating may include aluminum oxide ($Al_2O_3$), silicon dioxide ($SiO_2$), or a combination thereof.

The solid electrolyte membrane may also serve as a separator member that isolates the positive electrode and the negative electrode to prevent short-circuiting of the battery. The material system or structure for the solid electrolyte membrane is not particularly limited in the present application, and any known solid electrolyte materials can be used in the present application on the basis that the inventive conception of the present application is not violated, including an oxide solid electrolyte, a sulfide solid electrolyte, a halide solid electrolyte, a boride solid electrolyte, a polymer solid electrolyte, or combinations thereof.

The negative electrode is not particularly limited in the present application, and any known negative electrode materials or systems can be used in the present application on the basis that the inventive conception of the present application is not violated. Generally, the negative electrode is formed by a lithium main material capable of being used as an negative electrode active material for lithium-ion batteries. The positive electrode active material is provided in one or more layers, and in some embodiments, the negative electrode may also include an electrolyte, such as a plurality of electrolyte particles.

The negative electrode may include a lithium-based negative electrode active material including, for example, lithium metal and/or lithium alloy. In some embodiments, the negative electrode is a silicon-based negative electrode active material containing silicon, such as silicon alloy, silicon oxide, or a combination thereof, which in some cases may be mixed with graphite. In other embodiments, the negative electrode may include a carbon-based negative electrode active

material including one or more of graphite, graphene, carbon nanotubes (CNTs), and combinations thereof. In other embodiments, the negative electrode includes one or more lithium-accepting negative electrode active materials such as lithium-titanium oxide ($Li_4Ti_5O_{12}$), one or more transition metals (e.g., tin (Sn)), one or more metal oxides (e.g., vanadium oxide ($V_2O_5$), tin oxide (SnO), titanium dioxide ($TiO_2$), titanium-niobium oxide ($Ti_xNb_yO_z$, wherein $0 \leq x \leq 2$, $0 \leq y \leq 24$, and $0 \leq z \leq 64$), metal alloy (e.g., copper-tin alloy (Cu6Sn5)), and one or more metal sulfides (such as iron sulfide (FeS)).

Optionally, the negatively active material in the negative electrode may be mixed with one or more conductive agents that provide electron conduction pathways and/or at least one polymeric binder that improve the structural integrity of the negative electrode. For example, optionally, the binder may be polytetrafluoroethylene (PTFE), sodium carboxymethyl cellulose (CMC), styrene-butadiene rubber (SBR), polyvinylidene fluoride (PVDF), nitrile butadiene rubber (NBR), styrene-ethylene-butylene-styrene copolymer (SEBS), styrene-butadiene-styrene copolymer (SBS), lithium polyacrylate (LiPAA), sodium polyacrylate (NaPAA), sodium alginate, lithium alginate, or combinations thereof. The conductive agent may include a carbon-based material, powdered nickel or other metal particles, or a conductive polymer. The carbon-based material may include carbon black, graphite, superP, acetylene black, carbon fibers and nanotubes, graphene, and other particles. Examples of the conductive polymer includes polyaniline, polythiophene, polyacetylene, polypyrrole, and poly(3,4-ethylenedioxythiophene): poly(styrenesulfonate)

The negative electrode may include more than or equal to about 50wt% to less than or equal to about 97wt% of the negative electrode active material, optional more than or equal to about 0wt% to less than or equal to about 60wt% of the solid electrolyte, optional more than or equal to about 0wt% to less than or equal to about 15wt% of the conductive material, and optional more than or equal to about 0wt% to less than or equal to about 10wt% of the binder.

In order to verify the experimental effects of the present application, the following embodiments and comparative embodiments are designed:

Example

Electrolyte preparation: a preparation method of the electrolyte is as follows: the electrolyte was prepared in a glove box (water content ≤ 0.01 ppm, oxygen content ≤ 0.01 ppm); a compound A, a compound B, and a compound C (if present) were mixed uniformly according to their respective mass fractions to obtain a well-mixed organic solvent. Then the well-mixed organic solvent, fully dried $LiPF_6$, lithium difluorophosphate ($LiPO_2F_2$), and 1,3-propanesultone (PS) were mixed according to a mass ratio of 85.5: 13: 0.5: 1 to prepare the electrolyte, and the total weight of the electrolyte was 100wt%.

Battery preparation: 1.5wt% of binder PVDF, 2wt% of conductive agent Super-P, 96.5wt% of lithium-nickel-manganate oxide LNMO positive electrode material, and an appropriate amount of dispersant N-methyl pyrrolidone were made into a slurry with a solid content of 65wt%, and after homogenization, coating, roller pressing, and plate cutting, the positive platewas prepared.

The 97.5wt% graphite negative electrode material, 1.5wt% conductive agent Super-P, 0.5wt% sodium carboxymethylcellulose (CMC), and 0.5wt% binder SBR were mixed with an appropriate amount of water, and after homogenization, coating, roller pressing, and plate cutting, the negative plate was prepared.

The electrolyte, positive plate, and negative plate provided by the embodiments and comparative examples were assembled to make a lithium-ion battery, respectively, and the ratio of the negative electrode capacity to the positive electrode capacity of the battery (N/P ratio) was designed to be 1.12, and the capacity was 1.2 Ah.

Performance test:

Room-temperature cycling performance test: the charge-discharge potential range was 3.5 V to 4.9 V, the charging process was performed at constant current 1C to 4.9 V, charge at constant voltage 4.9 V to cut-off current ≤ 0.05 C, and let it stand for 5 minutes, and then discharge at 1C to 3.5 V, and let it stand for 5 minutes; such charge-discharge cycling was carried out to test the cycling performance at the room temperature (25 °C), and record the cycling capacity retention after 50 cycles.

Low-temperature capacity retention test: the above fresh battery cell was first charged and discharged at room temperature for one cycle at 0.33C rate with a voltage range of 3.5-4.9 V, and the discharging capacity was recorded as Cap.25°C; then, the battery was fully charged at 25°C at 0.33C rate with a charging cut-off voltage of 4.9 V, and then the battery was placed at -20°C, kept at -20°C for 8 h, so that the temperature of the cell was -20°C, and then discharged at 0.33C rate with a discharging cut-off voltage of 2.8 V, and the discharging capacity was recorded as Cap.-20°C, and a low-temperature capacity retention = Cap.-20°C/Cap.25°C.

Table 1 Examples

| | $R_1$ | $R_2$ | Compound B | Compound C | WA/WB | x+y | Capacity retention /% | Low-temperature retention /% |
|---|---|---|---|---|---|---|---|---|
| 1 | $(CH_3)_2C$ H | $CH_2CH_3$ | I | / | 5.67 | 3 | 81 | 95 |
| 2 | 0.5($CH_3$ $)_2CH$+0. 5$(CH_3)_3$ C | $CH_2CH_3$ | I | / | 5.67 | 3.5 | 86 | 96 |
| 3 | $(CH_3)_3C$ | $CH_2CH_3$ | I | / | 5.67 | 4 | 94 | 96 |
| 4 | $(CH_3)_3C$ | $CH_2CH_3$ | 0.5I+0.5III | / | 5.67 | 4.5 | 91 | 93 |
| 5 | $(CH_3)_2C$ H | $CH_2CH_3$ | III | / | 5.67 | 4 | 80 | 93 |
| 6 | $(CH_3)_3C$ | $CH_2CH_3$ | III | / | 5.67 | 5 | 88 | 90 |
| 7 | $(CH_3)_3C$ $(CH_3)_2C$ | $CH_3$ | I | / | 5.67 | 6 | 72 | 88 |
| 8 | $(CH_3)_3C$ | $CH_3$ | V | / | 5.67 | 7 | 66 | 87 |
| 9 | $(CH_3)_3C$ $(CH_3)_2C$ | $CH_3$ | III | / | 5.67 | 7 | 69 | 87 |
| 10 | $(CH_3)_3C$ | $CH_2CH_3$ | I | / | 50 | 4 | 73 | 88 |
| 11 | $(CH_3)_3C$ | $CH_2CH_3$ | I | / | 1.5 | 4 | 80 | 88 |
| 12 | $(CH_3)_3C$ | $CH_2CH_3$ | I | / | 2.45 | 4 | 88 | 89 |
| 13 | $(CH_3)_3C$ | $CH_2CH_3$ | I | / | 19 | 4 | 90 | 90 |
| 14 | $(CH_3)_3C$ | $CH_2CH_3$ | I | 15%EC+5 %EMC | 5.67 | 4 | 75 | 85 |
| 15 | $(CH_3)_3C$ | $CH_2CH_3$ | I | 10%EC | 5.67 | 4 | 82 | 86 |
| 16 | $(CH_3)_3C$ | $CH_2CH_3$ | I | 5%EC | 5.67 | 4 | 85 | 87 |

Table 2 Comparative Examples

| | $R_1$ | $R_2$ | Compound B | Compound C | WA/WB | x+y | Capacity retention /% | Low-temperature retention /% |
|---|---|---|---|---|---|---|---|---|
| 1 | $CH_3$ | $CH_3$ | I | / | 5.67 | 2 | 46 | 83 |
| 2 | $(CH_3)_2C$ H | $CH_3$ | | 15%EC | / | 2 | 51 | 82 |
| 3 | $(CH_3)_3C$ $(CH_3)_2C$ | $CH_3$ | V | / | 5.67 | 9 | 60 | 81 |
| 4 | / | / | / | EC/EMC=3: 7 | / | / | 32 | 73 |
| 5 | $CH_3CH_2$ | $CH_2CH_3$ | IV | / | 5.67 | 4 | 58 | 80 |
| 6 | $CH_3CH_2$ | $CH_2CH_3$ | III | / | 5.67 | 3 | 60 | 81 |

As can be seen from the above examples and comparative examples, for the electrolyte involved in the present application, when the number of methyl groups in the compound A and the number of F atoms in compound B are in the range of 3 to 7, the electrolyte is compatible with the high-voltage positive electrode material system and exhibits good performance. At the same time, a comparison between the Comparative Examples 5 and 6 shows that the solvent system formed by compounding a linear carboxylate solvent with compound B fails to achieve the effect of the present application even if the value of x+y is within the protection range of the present application. Experiments show that, unlike the general view that the branched chain has the defect of causing viscosity increase, in the high-voltage system, the specific branched chain structure of the present application produces a better synergistic effect with the F atoms in the compound B, which can meet the performance requirements of the electrolyte in the high-voltage system.

Particularly, the performance of the electrolyte of the present application is further enhanced in the value range of x + y = 3-5, indicating that the methyl groups of the compound A having the branched-chain structure and the F atoms in the

compound B have a strong synergistic effect, and thereby the electrolyte of the present application has excellent performance.

Meanwhile, comparing Example 13 with other embodiments, it can be seen that the addition amount of the compound B in the present application should not be too low, and when the addition amount is less than 5%, the performance gradually decreases.

And surprisingly, when the carbonate solvent is added to the electrolyte solvent system of the present application, the performance unexpectedly deteriorates, which is different from the synergistic effect between the conventional linear carboxylate and carbonate.

By Comparative Examples 5-6, the conventional linear carboxylate has better low-temperature performance, but has poor compatibility with the high-voltage system, because the branched chain has a poor viscosity performance compared to that of the linear carboxylate, which affects the low-temperature performance of the battery and is in line with the laws of carboxylates recognized in the prior art.

It is understood by those skilled in the art that the foregoing is only embodiments of the present application, and is not intended to limit the present application, and any modifications, equivalent substitutions, improvements, etc. made within the spirit and principles of the present application shall be included in the scope of protection of the present application.

## Claims

1. A high-voltage lithium-ion battery comprising a positive electrode, a negative electrode, and an electrolyte, wherein the electrolyte comprises a solvent, the solvent comprises a compound A and a compound B, and a mass fraction of the compound A in the solvent is denoted as $w_A$, and a mass fraction of the compound B in the solvent is denoted as $w_B$; and the compound A satisfies the following structural formula:

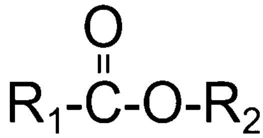

,

wherein each of $R_1$ and $R_2$ is independently selected from a hydrocarbyl group and a fluoro-hydrocarbyl group, a number of the methyl group in $R_1$ is x, and $2 \leq x \leq 5$;
and at least one carbon atom in the main chain of $R_1$ is connected with at least two methyl groups;
the compound B satisfies the following structural formula:

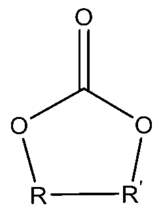

,

wherein R and R' are methylene groups, at least one H atom of at least one of R and R' is substituted by F atom, and a number of the F atom in R and R' is y, and $1 \leq y \leq 4$;
$w_A$, $w_B$, x, and y satisfy the following relationship:

$$1.5 \leq w_A/w_B \leq 50;$$

and

$$3 \leq x + y \leq 7.$$

2. The lithium-ion battery according to claim 1, wherein a number of carbon atom in the main chain of $R_1$ is 1-3.

3. The lithium-ion battery according to claim 1, wherein the lithium-ion battery comprises at least one positive electrode active material having a charging cut-off voltage of ≥ 4.5 V.

4. The lithium-ion battery according to claim 3, wherein the positive electrode active material having a charging cut-off voltage of greater than 4.5 V accounts for 50wt% or more of all the positive electrode active material in a positive electrode active material layer.

5. The lithium-ion battery according to claim 1, wherein negative electrode a lithium-intercalation cut-off potential of the negative electrode ≤ 1.0 V.

6. The lithium-ion battery according to claim 1, wherein the total number of carbon atom in $R_1$ and $R_2$ is greater than or equal to 4 and less than or equal to 9.

7. The lithium-ion battery according to claim 1, wherein the number of carbon atom in the main chain of $R_2$ is 1-3.

8. The lithium-ion battery according to claim 1, wherein $R_2$ is selected from one of a methyl group and an ethyl group.

9. The lithium-ion battery according to claim 1, wherein in the compound A, at least one H atom of $R_1$ and $R_2$ is substituted by F atom.

10. The lithium-ion battery according to claim 1, wherein in the electrolyte, an addition amount of carbonate is less than 5wt% of the total mass of the electrolyte.

11. The lithium-ion battery according to claim 9, wherein in the electrolyte, the addition amount of carbonate is less than 1wt% of the total mass of the electrolyte.

12. The lithium-ion battery according to claim 10, wherein in the electrolyte, the addition amount of carbonate is less than 0.01wt% of the total mass of the electrolyte.

13. The lithium-ion battery according to claim 1, wherein a mixture consisting of the compound A and the compound B accounts for 60-100% of the total mass of the solvent.

14. The lithium-ion battery according to claim 12, wherein the mixture consisting of the compound A and the compound B accounts for 70-100% of the total mass of the solvent.

15. The lithium-ion battery according to claim 13, wherein the mixture consisting of the compound A and the compound B accounts for 80-100% of the total mass of the solvent.

16. The lithium-ion battery according to claim 14, wherein the mixture consisting of the compound A and the compound B accounts for 90-100% of the total mass of the solvent.

17. The lithium-ion battery according to claim 1, wherein the compound B accounts for 10% or more of the total mass of the solvent in the electrolyte.

18. The lithium-ion battery according to claim 1, wherein the structural formula of the compound B is selected from one of the following structural formulas:

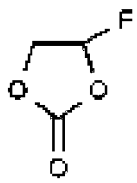

I

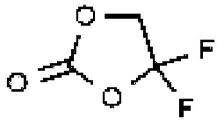

II

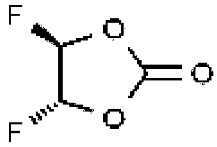

III

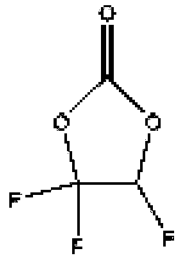

IV

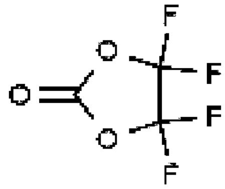

V

**INTERNATIONAL SEARCH REPORT**

International application No. **PCT/CN2024/097267**

**A. CLASSIFICATION OF SUBJECT MATTER**

H01M10/0569(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M10/-

Documentation searched other than minimum documentation to the extent that such documents are included in the fields searched

Electronic data base consulted during the international search (name of data base and, where practicable, search terms used)

CNTXT, ENTXTC, VEN, ISI, CNKI: 氟3w代, 电池, 电解液, 电解质, 氟化, 高电位, 高电压, 取代, 溶剂, 碳酸亚乙酯, 碳酸乙烯酯, 碳酸酯, 烷基, 支链, 羧酸酯, 酯, alkyl, battery, carbonate, electrolyte, ester, fluorinated, fluorine, generation, solvent, substitut+, branched chain, ethylene carbonate, carboxylic acid ester, high potential, high voltage

**C. DOCUMENTS CONSIDERED TO BE RELEVANT**

| Category* | Citation of document, with indication, where appropriate, of the relevant passages | Relevant to claim No. |
|---|---|---|
| PX | CN 118040063 A (QINGTAO (KUNSHAN) ENERGY DEVELOPMENT CO., LTD.) 14 May 2024 (2024-05-14)<br>description, paragraphs 5-48 | 1-18 |
| A | WO 2016090738 A1 (DONGGUAN AMPEREX TECHNOLOGY LTD. et al.) 16 June 2016 (2016-06-16)<br>description, page 2, paragraphs 1-2 and 4, page 3, paragraph 2, page 4, paragraphs 6-7, and page 5, paragraph 4 | 1-18 |
| A | CN 110010969 A (HUNAN INSTITUTE OF TECHNOLOGY) 12 July 2019 (2019-07-12)<br>description, paragraphs 12, 17, 19-21, and 70 | 1-18 |
| A | US 2015140443 A1 (NEC CORP.) 21 May 2015 (2015-05-21)<br>description, paragraphs 53, 62, and 66-67, and claim 20 | 1-18 |
| A | CN 106025356 A (NINGDE AMPEREX TECHNOLOGY LTD.) 12 October 2016 (2016-10-12)<br>entire description | 1-18 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 November 2024** | **29 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/097267**

**C. DOCUMENTS CONSIDERED TO BE RELEVANT**

| Category* | Citation of document, with indication, where appropriate, of the relevant passages | Relevant to claim No. |
|---|---|---|
| A | JP 2017152262 A (TOMIYAMA PURE CHEMICAL INDUSTRIES, LTD.) 31 August 2017 (2017-08-31)<br>entire description | 1-18 |
| A | 邱亚明等 (QUE, Yaming et al.). "富锂锰基锂离子电池电解液开发与优化 (Development and Optimization of Lithium-rich Manganese-based Lithium-ion Battery Electrolyte)" *广东化工 (Guangdong Chemical Industry),*<br>Vol. 50. No. 18, 22 September 2023 (2023-09-22), 1-3<br>sections 1-2 | 1-18 |

Form PCT/ISA/210 (second sheet) (July 2022)

**INTERNATIONAL SEARCH REPORT**
**Information on patent family members**

International application No.
**PCT/CN2024/097267**

| Patent document cited in search report | | | Publication date (day/month/year) | Patent family member(s) | | | Publication date (day/month/year) |
|---|---|---|---|---|---|---|---|
| CN | 118040063 | A | 14 May 2024 | CN | 118040063 | B | 02 July 2024 |
| WO | 2016090738 | A1 | 16 June 2016 | CN | 104466251 | A | 28 March 2015 |
| | | | | CN | 104466251 | B | 24 July 2018 |
| CN | 110010969 | A | 12 July 2019 | None | | | |
| US | 2015140443 | A1 | 21 May 2015 | US | 9905887 | B2 | 27 February 2018 |
| | | | | EP | 2858164 | A1 | 08 April 2015 |
| | | | | EP | 2858164 | A4 | 17 February 2016 |
| | | | | EP | 2858164 | B1 | 17 January 2018 |
| | | | | WO | 2013183655 | A1 | 12 December 2013 |
| | | | | JPWO | 2013183655 | A1 | 01 February 2016 |
| | | | | JP | 6187458 | B2 | 30 August 2017 |
| | | | | BR | 112014030119 | A2 | 27 June 2017 |
| CN | 106025356 | A | 12 October 2016 | CN | 106025356 | B | 24 May 2019 |
| JP | 2017152262 | A | 31 August 2017 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 107666011 A